# EUROPÄISCHE PATENTSCHRIFT

(11) **EP 3 478 643 B1**
(45) Veröffentlichungstag und Bekanntmachung des Hinweises auf die Patenterteilung: **20.04.2022**
(21) Anmeldenummer: 17735453.7
(22) Anmeldetag: 27.06.2017
(51) Int. Cl.: C04B 28/24, B22C 5/00, C04B 40/00, C04B 38/00, C04B 111/28, C04B 111/10, C04B 111/40, C04B 111/76

(54) **WÄRMEDÄMMENDER, FEUERFESTER FORMKÖRPER, INSBESONDERE PLATTE, UND VERFAHREN ZU DESSEN HERSTELLUNG UND DESSEN VERWENDUNG**
HEAT INSULATING REFRACTORY MOULDED BODY, PARTICULARLY A PANEL, AND METHOD FOR PRODUCING SAME AND USE OF SAME
CORPS MOULÉ RÉFRACTAIRE THERMO-ISOLANT, EN PARTICULIER PLAQUE, SON PROCÉDÉ DE FABRICATION ET SON UTILISATION

(30) Priorität: 30.06.2016 DE 102016112042
(43) Veröffentlichungstag der Anmeldung: 08.05.2019
(73) Patentinhaber: Refratechnik Holding GmbH, 80807 München (DE)
(72) Erfinder: JANSEN, Helge, Prof. Dr., 40547 Düsseldorf (DE); SCHEMMEL, Thomas, Dr., 40668 Meerbusch (DE); STEIN, Petra, Dr., 37079 Göttingen (DE); SCHÖLWER, Michael, 42551 Velbert (DE)
(74) Vertreter: Dr. Solf & Zapf Patent- und Rechtsanwalts PartG mbB
(86) Internationale Anmeldenummer: PCT/EP2017/065923
(87) Internationale Veröffentlichungsnummer: WO 2018/002098

(56) Entgegenhaltungen:
- EP-A1- 1 602 425
- WO-A1-2015/039843
- CA-A- 1 128 254
- CN-A- 1 594 197
- DE-A1- 2 049 054
- DE-A1- 3 020 681
- DE-A1-102006 045 451
- DE-A1-102012 015 026
- DE-B2- 2 049 054
- DE-C2- 3 020 681
- DE-U1- 9 405 748
- GB-A- 2 347 143
- US-A- 3 353 975
- US-A- 3 654 199
- US-A- 3 662 809
- US-A- 3 917 110
- US-A1- 2005 199 366
- DATABASE WPI Week 197943 12. September 1979 (1979-09-12) Thomson Scientific, London, GB; AN 1979-77868B XP002774273, SHIRAHATA T.: "Warmth keeping material of molten metal based on used filter aid", & JP S54 117321 A (SHIRAHATA T.) 12. September 1979 (1979-09-12)

## Beschreibung

Die vorliegende Erfindung betrifft einen wärmedämmenden, feuerfesten Formkörper, insbesondere eine Platte, vorzugsweise zur thermischen Isolation von Metallschmelzen, insbesondere von Stahlschmelzen, gegenüber der umgebenden Atmosphäre oder einem metallurgischen Gefäß, insbesondere bei der Herstellung von Stahl in Stahlwerken sowie ein Verfahren zu dessen Herstellung und seine Verwendung.

In der Metallurgie ist es üblich, die freie Oberfläche der sich in einem offenen metallurgischen Gefäß befindlichen Metallschmelze, insbesondere der Stahlschmelze, mit einem Abdeckmittel abzudecken. Das Abdeckmittel bildet eine Schutz- und Wärmedämmschicht. Es schirmt einerseits das Metallschmelzbad vor atmosphärischen Gasen ab, um unerwünschte chemische Reaktionen der Metallschmelze zu vermeiden. Andererseits dient es zur Isolation bzw. Wärmedämmung gegenüber der Atmosphäre. Somit sorgt das Abdeckmittel für eine gute Oberflächenqualität.

Als Abdeckmittel werden üblicherweise lose Schüttungen aus feuerfesten Materialien, insbesondere aus Reisschalenasche verwendet. Reisschalenasche wird in großen Mengen in vielen Reis produzierenden Ländern hergestellt. Sie fällt als Nebenprodukt bei der Verbrennung von Reisschalen (Spelzen) an. Wenn diese verbrannt werden, entsteht Reisschalenasche, die chemisch sehr rein ist und zu 94-96% aus SiO₂ in amorpher Form besteht. Reisschalenasche wird deshalb auch als biogene Kieselsäure bezeichnet. Sie hat einen sehr hohen Schmelzpunkt von ca. 1.650 °C. Bei der Herstellung verbrennen die flüchtigen Bestandteile, wobei aber eine einzigartige, mikroporöse Struktur des SiO₂ erhalten bleibt. Aus dieser Struktur resultiert sowohl eine extrem niedrige Wärmeleitfähigkeit als auch ein niedriges Schüttgewicht der Reisschalenasche. Reisschalenasche bewirkt aufgrund dessen zwar eine hervorragende Wärmedämmung, allerdings führt sie aufgrund ihrer hohen Feinheit, insbesondere beim Aufbringen auf die Metallschmelzenoberfläche zu einer hohen Staubbelastung, die gesundheitsgefährdend sein kann. Denn die Feinstaubpartikel können in den menschlichen Körper gelangen und z.B. Augenverletzungen hervorrufen. Deshalb müssen beispielsweise Absaugeinrichtungen installiert werden, welche wiederum aufgrund des Absaugens der Reisschalenasche zu Materialverlusten führen.

Aus diesem Grund, ist es auch bekannt, anstelle der reinen Reisschalenasche, Granulate als Abdeckmittel zu verwenden. Die Granulate bestehen aus granulierten feuerfesten Materialien, die mittels eines Bindemittels verfestigt sind. Beispielsweise gehen derartige Granulate aus der DE 10 2013 000 527 A1, der DE 197 28 368 C1 und der DE 197 31 653 C2 hervor.

Die Granalien der DE 10 2013 000 527 A1 enthalten hauptsächlich, vorzugsweise bis zu 90 Gew.-%, Kieselgur. Als Bindemittel wird z.B. Bentonit, Wasserglas oder Zellulose verwendet. Auch können die Granalien Polyvinylpolypyrrolidon als Bindemittel enthalten. Das Granulat schmilzt nach einiger Zeit auf.

Das Granulat der DE 197 28 368 C1 weist Granalien auf, die hergestellt werden aus Reisschalenasche, einem organischen, gelbildenden Bindemittel in Mengen von 1 bis 10 Gew.-% sowie Wasser in Mengen von 20 bis 100 Gew.-%.

Die Kügelchen/Pellets des Granulats der DE 197 31 653 C2 bestehen aus Reisschalenasche, die mit einer oberflächenaktiven Substanz und einem Bindemittel gemischt wird. Bei der oberflächenaktiven Substanz kann es sich um Natriumalginat, Natriumsalz von Carboxymethylcellulose, Natriumhexametaphosphat oder Mischungen daraus handeln. Bei dem Bindemittel kann es sich um Polyvinylalkohol, Melasse, Natriumhexametaphosphat, Portland-Zement, Natriumsilikat und ausgefälltes Calciumcarbonat und Mischungen daraus handeln. Die Kügelchen/Pellets werden nach dem Mischen und Verpressen getrocknet und dann bei einer Temperatur von 800-1400 °C gebrannt.

Die Granulate führen zwar zu einer deutlich verringerten Staubbelastung im Vergleich zu reiner Reisschalenasche. Sie weisen aber auch ein höheres Schüttgewicht auf und führen somit zu einer schlechteren Isolation. Zudem sind sie herstellungsbedingt deutlich teurer als Schüttungen aus reiner Reisschalenasche.

Bei den abzudeckenden metallurgischen Gefäßen handelt es sich insbesondere um einen Metallverteiler, bevorzugt einen Stranggießverteiler (Tundish), eine Gießpfanne oder eine Kokille für den steigenden oder fallenden Blockguss. Beim Blockguss wird das flüssige Metall in eine stehende Form (Kokille) eingefüllt und erstarrt in dieser. Das Einfüllen kann sowohl von oben (fallender Blockguss) als auch über ein Zuführsystem von unten (steigender Blockguss) geschehen. Nach dem Erstarren wird die Kokille gestrippt, also vom erstarrten Metall gezogen und der Gussblock wird weiterverarbeitet.

Während die Stahlschmelze in der Kokille erstarrt, können sich vor allem im Blockkopf Schwindungshohlräume (Lunker) bilden. Bestandteile mit relativ niedriger Schmelztemperatur werden vor der Kristallisationsfront höher schmelzender Bestandteile her nach oben getrieben. Dadurch und durch die Strömung aufsteigender Gasblasen können sich Elemente wie Schwefel, Phosphor und Kohlenstoff im Blockkopf konzentrieren. Es entstehen so genannte Blockseigerungen. Durch aufgeschwemmte Schlacke kommt es also zu "Kopfabfall". Daher muss der betreffende obere Bereich des Blocks vor der Weiterverarbeitung abgetrennt werden.

Durch eine gute thermische Isolation des Blockkopfes kann die Metallschmelze im Blockkopf länger flüssig gehalten werden und erstarrt langsamer. Der Gussblock wird durchgehend dicht und der abzutrennende Teil bleibt relativ klein. Die Kopfisolierung ist im Blockguss daher besonders wichtig.

Beim steigenden Blockguss bei der Stahlerzeugung wird zur Blockkopfisolierung üblicherweise zunächst eine Halteplatte oder eine Metallstange auf die Kokille aufgelegt. Die Halteplatte besteht in der Regel aus wärmeliefernden Materialien (sog. "exotherme Platte) aus Mischungen von verschiedenen feuerfesten Oxiden mit Metallpulver und häufig fluoridhaltigen Komponenten. An der Halteplatte oder der Metallstange ist mittels eines Strickes ein Sack mit Gießpulver befestigt. Der Sack verbrennt nach kurzer Zeit aufgrund der hohen Wärme der Stahlschmelze, so dass sich das Gießpulver auf der Stahlschmelze verteilt und zwischen der Kokille und dem Stahlbad als Trenn- und Schmiermittel wirkt. Anschließend wird die Halteplatte oder die Metallstange entfernt und manuell die jeweilige Schüttung als Abdeckmittel auf die Metallschmelzenoberfläche aufgegeben. Dieses Verfahren ist sehr aufwendig und durch die unmittelbare Nähe zur heißen Kokille für den Ausführenden gefährlich.

Es ist zudem bekannt, durch eine ringförmige Isolationshaube (sog. "Gießhaube) den Kopflunker im Blockkopf zu minimieren. Die Isolationshaube ist als getrenntes Bauteil am oberen Ende der Kokille bzw. am Kokillenkopf angeordnet und in diesen eingesetzt. Sie isoliert so den Kokillenkopf von der Stahlschmelze im Bereich des Blockkopfes. Die Isolationshaube kann als einteiliges Bauteil ausgebildet sein oder aus mehreren miteinander verbundenen Platten bestehen. Die einteiligen Isolationshauben und die Platten bestehen in der Regel aus thermisch isolierendem Material.

Die DE 20 49 054 A1 offenbart eine Bahn aus Silikasol, Aluminiumsilikatfasern und calcinierter Reisschalenasche. Der Anteil an Aluminiumsilikatfasern ist dabei immer deutlich höher als der Anteil an Reisschalenasche. Aus der D1 geht auch nicht der Druckerweichungspunkt der Bahn hervor.

Die DE 94 05 748 U1 offenbart eine ungebrannte Flammenumlenkplatte, welche eine Oberschale und eine Unterschale aufweist. Sowohl die Oberschale als auch die Unterschale weisen jeweils Reisschalenasche sowie Kieselsol als Bindemittel auf. In den Beispielen der DE 94 05 748 U1 werden jeweils Rezepturen für die Oberschale und die Unterschale angegeben, wobei die Obergrenze für den Gehalt an Reisschalenasche in der Oberschale bei 70 Gew.-% und der Unterschale bei 50 Gew.-% liegt. Allerdings addieren sich die in den Beispielen angegebenen Unter- und Obergrenzen zu über 100 Gew.-%. Zudem weisen die Rezepturen weitere Bestandteile auf, nämlich 50-80 Gew.-% Perlit und 2-10 Gew.-Zirkonsilikat (Beispiel 1), bzw. 30-50 Gew.-% Mahlcordierit und 2-10 Gew.-Zirkonsilikat (Beispiel 2) und 30-70 Gew.-% Leichtschamotte und 2-10 Gew.-Zirkonsilikat (Beispiel 3).

Die CN 1594197 A offenbart ein Material, welches 10 bis 90 Gew.-% Pflanzenasche aufweisen soll. Gemäß der Beschreibung der CN 1594197 A kann es sich bei der Pflanzenasche beispielsweise um Asche aus Reisschalen, Weizenschalen, Bohnenschale, Bohnenstangen etc. handeln. Als Bindemittel kann gemäß der CN 1594197 A beispielsweise eine Aluminium Phosphat Lösung, Wasserglas, kolloidales Silika, Aerogel, organische Siliciummischungen, Polivinyl Acetate Emulsion, PVFM, Polyacrylate, Gummipulver und anorganische zementartige Binder (Zement, Kalk, Gips und Magnesit, etc.) verwendet werden. Ein besseres Ergebnis kann gemäß der CN 1594197 A erwartet werden, wenn man anorganische und organische Binder mischt. In den Beispielen der CN 1594197 A wird teilweise Reisschalenasche und Kieselsol als Bindemittel verwendet. Allerdings wird Kieselsol immer nur in Kombination mit anderen Bindemitteln, nämlich Polyvinylalkohol oder Wasserglas verwendet.

Zudem geht aus der CN 1594197 A kein Druckerweichungspunkt hervor. Es wird leidglich in einer Tabelle, in der Leistungsindikatoren angegeben werden, ein Temperaturbereich von -40 bis 1000°C" angegeben.

Die GB 2 347 143 A offenbart eine Zusammensetzung für die Herstellung von wärmeisolierenden, feuerfesten Produkten aufweisend biogene Kieselsäure, ein Fasermaterial und ein Bindemittel, wobei die biogene Kieselsäure im Wesentlichen frei von Cristobalit ist. Die biogene Kieselsäure kann z.B. in Mengen von 10 bis 90 Gew.-% enthalten sein. Zudem kann als Bindemittel Silikasol in Kombination mit Stärke verwendet werden. Generell gibt die GB 2 347 143 A für alle Bestandteile der Zusammensetzung (biogene Kieselsäure, Fasern, Bindemittel) jeweils unterschiedliche Ausführungsformen und sehr weit gefasste Bereiche und somit sehr viele mögliche Kombinationen an, die unter anderem beliebig viele unterschiedliche Erweichungspunkte ergeben können.

Gemäß dem einzigen in der GB 2 347 143 A offenbarten Ausführungsbeispiel weist die Zusammensetzung folgende Bestandteile auf:
2000g Mineralfasern
800g Kaolin
4000g Reisschalenasche
1600g Alumina (-200 mesh)
600g kationische Stärke
1200mls Silikasol (40% silica)

Die oben angegebenen Bestandteile werden mit 400 Liter Wasser angemischt, so dass eine Schlämme hergestellt wird. Anschließend werden durch Vakuumformung isolierende Hülsen daraus hergestellt. Aus der GB 2 347 143 A geht nicht hervor, wie hoch der Druckerweichungspunkt der hergestellten Formkörper ist.

Aufgabe der vorliegenden Erfindung ist die Bereitstellung eines feuerfesten, wärmedämmenden Formkörpers, insbesondere einer feuerfesten, wärmedämmenden Platte, der bzw. die ein geringes spezifisches Gewicht und eine hohe chemische Reinheit aufweisen soll.

Der Formkörper soll insbesondere zur thermischen Isolation von Metallschmelzen, insbesondere von Stahlschmelzen, gegenüber der umgebenden Atmosphäre und/oder einem metallurgischen Gefäß, insbesondere bei der Herstellung von Stahl, geeignet sein, wobei der Formkörper einfach und kostengünstig herstellbar sein soll, eine gute Wärmedämmung gewährleisten soll und weder gesundheits- noch umweltschädlich sein soll.

Weitere Aufgabe ist die Bereitstellung eines einfachen und kostengünstigen Verfahrens zur Herstellung des Formkörpers.

Diese Aufgabe wird durch einen Formkörper, bevorzugt eine Platte, mit den Merkmalen von Anspruch 1 sowie ein Verfahren mit den Merkmalen von Anspruch 10 gelöst. Erfindungsgemäße Verwendungen des Formkörpers sind in den Ansprüchen 13 und 18 gekennzeichnet. Vorteilhafte Weiterbildungen der Erfindung sind in den sich anschließenden Unteransprüchen gekennzeichnet.

Gemäß einer vorteilhaften Ausgestaltung des Verfahrens werden die Zuschlagkörner aus der biogene Kieselsäure vor dem Mischen mit den übrigen Bestandteilen der Mischung mit Wasser und/oder Silikasol zu Granulatkörnern agglomeriert und die Granulatkörner in plastischem Zustand mit den übrigen Bestandteilen der Mischung gemischt.

Im Folgenden wird die Erfindung anhand einer Zeichnung beispielhaft näher erläutert. Es zeigen:
- Figur 1:: Schematisch einen Querschnittsausschnitt durch den erfindungsgemäßen Formkörper
- Figur 2:: Schematisch und stark vereinfacht eine Kokille für den aufsteigenden Blockguss vor Beginn des Gießvorgangs mit einer Abdeckplatte
- Figur 3:: Die Kokille gemäß Figur 2 während des Gießvorganges
- Figur 4:: Die Kokille gemäß Figur 2 am Ende des Gießvorganges
- Figur 5:: Schematisch und stark vereinfacht einen Gießverteiler vor dem Anguss
- Figur 6:: Den Gießverteiler gemäß Figur 5 nach dem Anguss

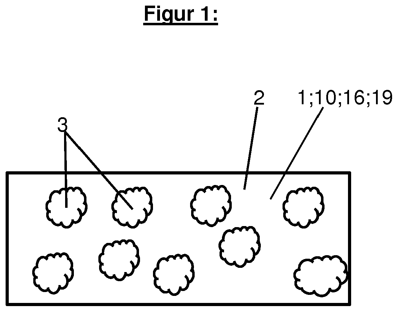

Der erfindungsgemäße, ungebrannte, feuerfeste Formkörper 1 (Fig. 1-6) weist eine Bindemittelmatrix 2 aus zumindest einem abgebundenen Bindemittel auf, in welches Zuschlagkörner 3 aus biogener Kieselsäure, bevorzugt aus Reisschalenasche, eingebettet bzw. eingebunden sind. Die Zuschlagkörner 3 sind in der Bindemittelmatrix 2 verteilt.

Erfindungsgemäß besteht die Bindemittelmatrix 2 ausschließlich aus Kieselgel (Silikagel). Kieselgel ist ein amorphes Siliciumdioxid. Infolgedessen besteht die Bindemittelmatrix 2 erfindungsgemäß aus amorphem Siliciumdioxid. Das Kieselgel entsteht dabei bekanntermaßen aus einem Kieselsol (Silikasol), einer wässrigen, lösemittelfreien, kolloidalen Lösung von amorphem Siliziumdioxid, durch Gelierung unter Bildung von Si-O-Si-Brücken und Trocknung.

Bei der biogenen Kieselsäure handelt es sich vorzugsweise ausschließlich um Reisschalenasche. Es kann sich aber auch um Diatomeenerde (Kieselgur) oder Kieselschiefer oder diagenetisch zu Gestein verfestigte Radiolarienskelette oder Schwämme aus Opal, handeln. Es können auch Mischungen unterschiedlicher biogener Kieselsäuren als Zuschlagstoff vorhanden sein.

Des Weiteren kann der Formkörper 1 auch weitere Zuschlagstoffe aus feuerfestem Material aufweisen. Zuschlagstoffe im Sinne der Erfindung sind allgemein Stoffe, die bzw. deren Körner in der Bindemittelmatrix 2 verteilt sind und in diese eingebunden bzw. eingebettet sind. Die Zuschlagstoffe reagieren dabei beim Abbinden nicht oder nur oberflächlich mit dem Bindemittel. Die Zuschlagkörner sind somit im Wesentlichen mechanisch in die Bindemittelmatrix 2 eingebunden.

Die weiteren Zuschlagstoffe bestehen dabei vorzugsweise wie die biogene Kieselsäure ebenfalls aus SiO₂. Insbesondere handelt es sich um Mikrosilika, bevorzugt pyrogene und/oder gefällte Kieselsäure. Dies hat den Vorteil, dass der erfindungsgemäße Formkörper 1 eine sehr hohe Alkaliresistenz aufweist, da sowohl die Bindemittelmatrix 2 als auch die Zuschlagstoffe aus amorphem SiO₂ bestehen.

Der Formkörper 1 kann auch weitere Zuschlagstoffe enthalten, die nicht aus nur aus SiO₂ bestehen. Beispielsweise kann der Formkörper expandierten Perlit und/oder expandierten Vermiculit und/oder geblähten Ton und/oder anorganische Fasern, bevorzugt Mineral- und/oder Schlacken- und/oder Glas- und/oder Keramik-Fasern, und/oder Flugaschen und/oder (Kraftwerks-) Filterstäube als Zuschlagstoff aufweisen. Die Menge an derartigen Zuschlagstoffen beträgt aber erfindungsgemäß < 10 Gew.-%, bezogen auf den Gesamtgehalt (Trockenmasse) an Zuschlagstoffen.

Erfindungsgemäß besteht der Zuschlag des Formkörpers 1 zudem zu mindestens 50 Gew.-%, bevorzugt zu mindestens 80 Gew.-%, besonders bevorzugt zu mindestens 90 Gew.-%, aus biogener Kieselsäure, bevorzugt aus Reisschalenasche, jeweils bezogen auf den Gesamtgehalt (Trockenmasse) an Zuschlagstoffen. Vorteilhafterweise weist der Formkörper 1 ausschließlich biogene Kieselsäure, bevorzugt ausschließlich Reisschalenasche, als Zuschlagstoff auf. Der Zuschlag des Formkörpers 1 besteht somit vorteilhafterweise zu 100 Gew.-% aus biogener Kieselsäure, bevorzugt zu 100 Gew.-% aus Reisschalenasche.

Die Herstellung des erfindungsgemäßen Formkörpers 1 erfolgt wie folgt:
Zunächst werden die trockenen Bestandteile gemischt. Bei den trockenen Bestandteilen handelt es sich um die biogene Kieselsäure und gegebenenfalls die anderen Zuschlagstoffe sowie gegebenenfalls amorphes Siliciumdioxid als Bindemittel. Anschließend wird der Trockenmischung Wasser zum Benetzen des Siliciumdioxids zugegeben, so dass die Kieselsäure aktiviert wird.

Es ist aber vorteilhaft, das amorphe Siliciumdioxid in bereits in gelöster oder dispergierter oder kolloiddisperser Form, also als Kieselsol, der Trockenmischung aus den übrigen Bestandteilen in flüssiger Form zuzugeben. Auch kann das amorphe Siliciumdioxid teilweise in trockener Form und teilweise als Kieselsol den übrigen Bestandteilen zugemischt werden.

Die Zusammensetzung der fertigen Mischung wird vorzugsweise so eingestellt, dass die Mischung nach 30 s unter Vibration ein Ausbreitmaß, bestimmt in Anlehnung an DIN EN ISO 1927-4 (03/2013), von 200 bis 500 mm, bevorzugt 250 bis 350 mm aufweist, ohne dass eine Auftrennung zwischen Grob- und Feinkornanteilen auftritt, wie dies bei reiner Reisschalenasche der Fall ist.

Vorzugsweise weist die fertige Mischung bzw. weist der Versatz zur Herstellung des Formkörpers 1 bezüglich der trockenen Bestandteile folgende Zusammensetzung bezogen auf die gesamte Trockenmasse auf, wobei sich die einzelnen Bestandteile zu 100 Gew.-% ergänzen:

| | **Anteil [Gew.-%]** | |
|---|---|---|
| | | vorzugsweise |
| Biogene Kieselsäure, vorzugsweise Reisschalenasche | 40,0 bis 95,0 | 65,0 bis 90,0 |
| Siliciumdioxid als Bindemittel | 5,0 bis 30,0 | 10,0 bis 20,0 |
| Weitere Zuschlagstoffe | 0 bis 20,0 | 0 bis 10,0 |
| Sonstige Bestandteile | 0 bis 10,0 | 0 bis 5,0 |

Des Weiteren beträgt das Gewichtsverhältnis des flüssigen Lösungsmittels, vorzugsweise des Wassers, zu den trockenen Bestandteilen vorzugsweise 2:1 bis 1:9, bevorzugt 1:1 bis 3:7.

Die verwendete Reisschalenasche weist zudem vorzugsweise folgende chemische Zusammensetzung gemäß DIN EN ISO 12677 (02/2013) auf, wobei sich die einzelnen Bestandteile (glühverlustfrei) zu 100 Gew.-% addieren:

| | **Anteil [Gew.-%]** | |
|---|---|---|
| | | vorzugsweise |
| SiO₂ | 92 bis 98 | 94 bis 97 |
| P₂O₅ | 0,5 bis 2,0 | 0,5 bis 1,5 |
| K₂O | 1,0 bis 3,0 | 1,5 bis 2,5 |
| Rest-Oxide | 0,5 bis 3,0 | 1,0 bis 2,0 |

Die verwendete biogene Kieselsäure, insbesondere die Reisschalenasche, weist außerdem vorzugsweise folgende Kornverteilung gemäß DIN 66165-2 (04/1987) bezogen auf die Trockenmasse auf, wobei sich die einzelnen Bestandteile zu 100 Gew.-% addieren:

| **Korngröße [mm]** | **Anteil [Gew.-%]** | |
|---|---|---|
| | | vorzugsweise |
| ≥ 2,0 | 0 bis 3,0 | 0,01 bis 0,5 |
| < 2,0-1,0 | 0,05 bis 4,0 | 0,1 bis 2,0 |
| < 1,0-0,5 | 1,0 bis 40,0 | 1,5 bis 35,0 |
| < 0,5-0,3 | 3,95 bis 40,0 | 8,39 bis 30,0 |
| < 0,3 | 30,0 bis 95,0 | 40,0 bis 90,0 |

Das Schüttgewicht gemäß DIN EN 1097-3 (06/1998) der verwendeten biogene Kieselsäure, insbesondere der Reisschalenasche, beträgt vorzugsweise 0,05 bis 0,5 g/cm³, bevorzugt 0,1 bis 0,4 g/cm³.

Die fertige Mischung wird anschließend in eine Form gegeben und in dieser verdichtet. Das Verdichten erfolgt insbesondere mittels Auflastvibration oder uniaxialem Pressen.

Bei der Auflastvibration befindet sich die Form auf einem Vibrationstisch. Auf die sich in der Form befindliche fertige Mischung wird ein Gewicht aufgelegt, der Vibrationstisch aktiviert und die Mischung mittels Vibration verdichtet. Mittels Auflastvibration werden in der Regel kleinere Formate hergestellt.

Beim uniaxialen Pressen wird die mit der fertigen Mischung befüllte Form in eine Presse eingelegt, wobei auf die Mischung eine Deckplatte aufgelegt wird. Dann wird der Oberstempel der Presse gegen die Deckplatte gefahren und die Mischung so mit bestimmtem Druck verdichtet. Vorzugsweise werden mehrere Presshübe durchgeführt. Mittels uniaxialem Pressen werden in der Regel größere Formate hergestellt.

Nach dem Verdichten wird der grünfeste Formkörper entformt und Abbinden gelassen. Das Abbinden lassen erfolgt insbesondere bei 110 bis 200 °C für vorzugsweise 4 bis 12 h. Die Temperatur wird so gewählt, dass das Bindemittel abbindet bzw. erhärtet. Sie liegt unterhalb der Temperatur für den keramischen Brand. Der erfindungsgemäße Formkörper 1 ist somit ungebrannt.

Der erfindungsgemäße Formkörper 1 weist dann vorzugsweise eine Trockenrohdichte ρ₀ von 0,3 bis 1,5 g/cm³, bevorzugt von 0,5 bis 1,3 g/cm³ gemäß DIN EN 1094-4 (09/1995) auf.

Zudem weist der Formkörper 1 vorzugsweise eine Porosität von 60 bis 90 %, bevorzugt von 70 bis 80 % gemäß DIN EN 1094-4 (09/1995) auf.

Die Kaltdruckfestigkeit des Formkörpers 1 liegt vorzugsweise bei 0,5 bis 15,0 MPa, bevorzugt bei 1,0 bis 10,0 MPa gemäß DIN EN 993-5 (12/1998).

Und die Kaltbiegefestigkeit des Formkörpers 1 beträgt vorzugsweise 0,3 bis 7,0 MPa, bevorzugt 0,5 bis 5,0 MPa gemäß DIN EN 993-6 (04/1995).

Die Heißbiegefestigkeit des Formkörpers 1 beträgt vorzugsweise 0,5 bis 5,0 MPa, bevorzugt 1,0 bis 3,0 MPa gemäß DIN EN 993-7 (04/1995).

Zudem weist der Formkörper 1 erfindungsgemäß einen Erweichungspunkt bestimmt mit einem Erhitzungsmikroskop gemäß DIN EN 51730 (09/2007) von 1500 bis 1700 °C, bevorzugt 1650 bis 1700 °C auf. Somit ist der Formkörper 1 für den dauerhaften bzw. permanenten Einsatz bei sehr hohen Temperaturen geeignet.

Außerdem weist der Formkörper 1 vorzugsweise folgende Wärmeleitfähigkeiten gemäß DIN EN 993-15 (07/2005) auf:

| | **WLF [W/mK]** | |
|---|---|---|
| | | vorzugsweise |
| bei 26°C | 0,10 bis 0,14 | 0,11 bis 0,13 |
| bei 307°C | 0,12 bis 0,16 | 0,13 bis 0,15 |
| bei 700°C | 0,17 bis 0,21 | 0,18 bis 0,20 |
| bei 995°C | 0,25 bis 0,29 | 0,26 bis 0,28 |

Der erfindungsgemäße Formkörper 1 weist außerdem vorzugsweise folgende chemische Zusammensetzung gemäß DIN EN ISO 12677 (02/2013) auf, wobei sich die einzelnen Bestandteile zu 100 Gew.-% addieren:

| | **Anteil [Gew.-%]** | |
|---|---|---|
| | | vorzugsweise |
| SiO₂ | 93,0 bis 99,0 | 95,0 bis 98,0 |
| P₂O₅ | 0,2 bis 1,5 | 0,5 bis 1,3 |
| K₂O | 0,3 bis 2,5 | 0,5 bis 2,2 |
| Rest-Oxide | 0,5 bis 3,0 | 1,0 bis 1,5 |

Wie bereits erläutert, wird der Formkörper 1 erfindungsgemäß zur thermischen Isolierung einer Metallschmelze, insbesondere einer Stahlschmelze von der Umgebung verwendet. Vorzugsweise wird der Formkörper 1 zur thermischen Kopfblockisolierung beim steigenden Blockguss verwendet.

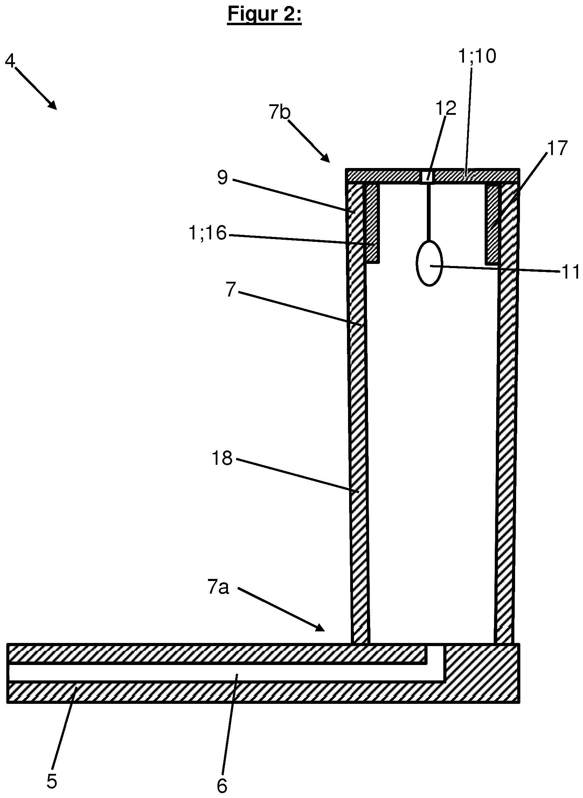

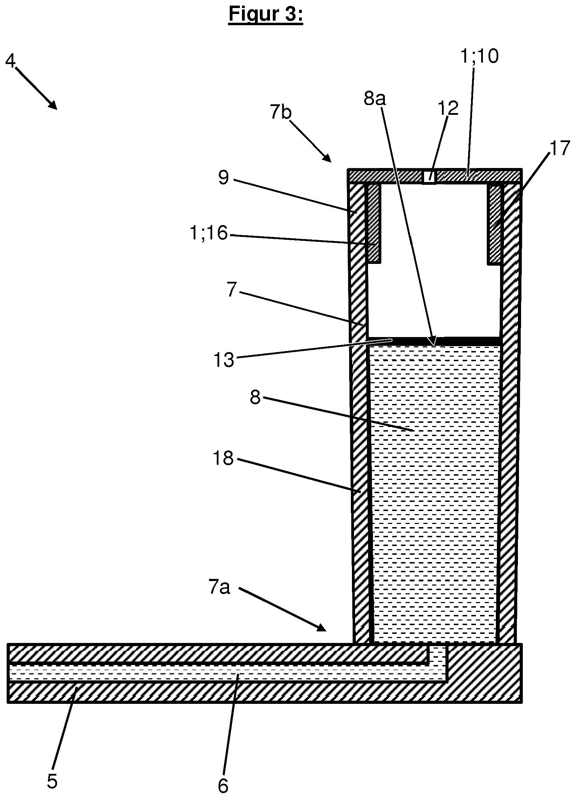

Ein Blockgussvorrichtung 4 (Fig. 2 und 3) für den steigenden Blockguss von Metall, insbesondere von Stahl, weist üblicherweise ein Untergestell 5 mit einem Gießkanal 6 zum Zuführen des geschmolzenen Metalls, insbesondere des Stahls, auf. Zudem weist die Blockgussvorrichtung 4 eine rohrförmige Kokille 7 zur Aufnahme eines Metallbades 8 aus Metallschmelze auf. Die Kokille 7 weist ein unteres und ein oberes, offenes Kokillenende 7a;b auf. Das obere Kokillenende 7b bildet einen Kokillenkopf 9 der Kokille 7.

Gemäß einem vorteilhaften Aspekt der Erfindung wird der Formkörper 1 als Abdeckplatte 10 zum Abdecken des oberen, offenen Kokillenendes 7b verwendet. Die Abdeckplatte 10 wird dazu vor Beginn des Blockgusses (Fig. 2) auf den Kokillenkopf 9 aufgelegt. Die Auflegung auf die Kokille 7 erfolgt somit ohne direkte Berührung mit dem Metallbad 8. Das Metallbad 8 wird somit durch die Abdeckplatte 10 indirekt, also ohne direkten Kontakt, thermisch isoliert. An der Abdeckplatte 10 ist ein mit Gießpulver befüllter Gießpulversack 11 derart befestigt, dass er von der Abdeckplatte 10 herunter hängt, in die Kokille 7 hinein. Zur Befestigung des Gießpulversackes 11 weist die Abdeckplatte 10 vorzugsweise eine von der einen zur anderen Plattenoberfläche durchgehende, mittige Aussparung 12 auf.

Nun wird die Metallschmelze, insbesondere die Stahlschmelze, durch den Gießkanal 6 von unten in die Kokille 7 eingefüllt und steigt in dieser nach oben (Fig. 3). Das Metallbad 8, insbesondere das Stahlbad, weist in der Regel eine Temperatur von ca. 1550°C auf. Der Gießpulversack 11 verbrennt deshalb nach kurzer Zeit aufgrund der hohen Wärme der Stahlschmelze, so dass sich das Gießpulver auf einer Metallbadoberfläche 8a verteilt und eine oberflächliche Gießpulverschicht 13 bildet. Das Gießpulver verteilt sich zudem zwischen der Kokille 7 und dem Metallbad 8 und wirkt als Trenn- und Schmiermittel.

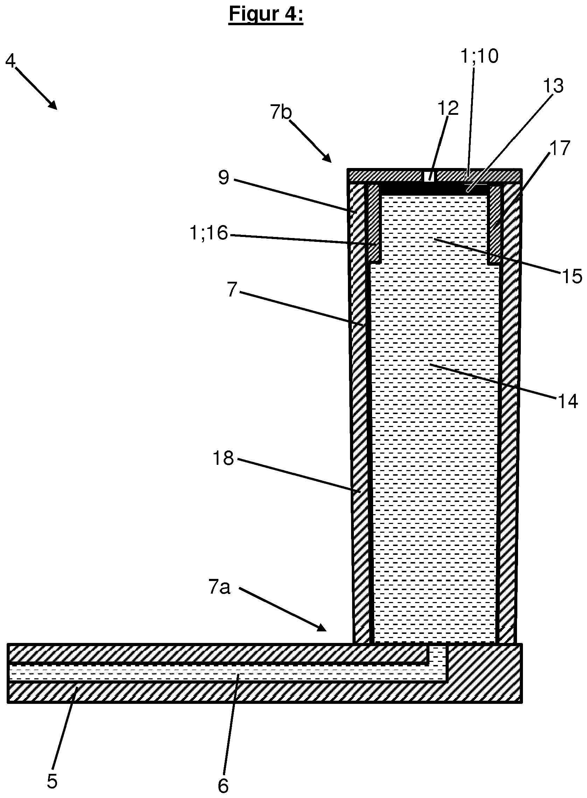

Das Metallbad 8 steigt während des Angusses bis zur Abdeckplatte 10 an und bildet einen erstarrenden Gussblock 14 mit einem oberen Blockkopf 15 (Fig. 4). Die Abdeckplatte 10 isoliert den Blockkopf 15 von der Atmosphäre und sorgt dadurch für eine langsame Abkühlung des Blockkopfes 15.

Gemäß einem weiteren vorteilhaften Aspekt der Erfindung wird der Formkörper 1 als Isolierplatte 16 für eine Gießhaube bzw. Isolierhaube 17 zur thermischen Isolation des Blockkopfes 15 von der Kokille 7, insbesondere vom Kokillenkopf 9, verwendet. Die ringförmige Isolierhaube 17 besteht aus mehreren, miteinander verbundenen, in Umfangsrichtung der Kokille 7 zueinander benachbart angeordneten, Isolierplatten 16. Sie dient zur inneren Auskleidung des Kokillenkopfes 9. Die Isolierhaube 17 liegt somit innenseitig an einer Kokillenwandung 18 an. Sie kann auch am oberen Kokillenende 7b über die Kokille 7 überstehen (nicht dargestellt). In diesem Fall wird sie insbesondere zusammen mit einer losen Schüttung zur Isolation der Metallbadoberfläche 8a verwendet, welche am Ende des Gießvorganges abgesaugt wird.

Die Isolierhaube 17 kann auch einteilig ausgebildet sein und der Formkörper 1 somit als Isolierhaube 17 verwendet werden.

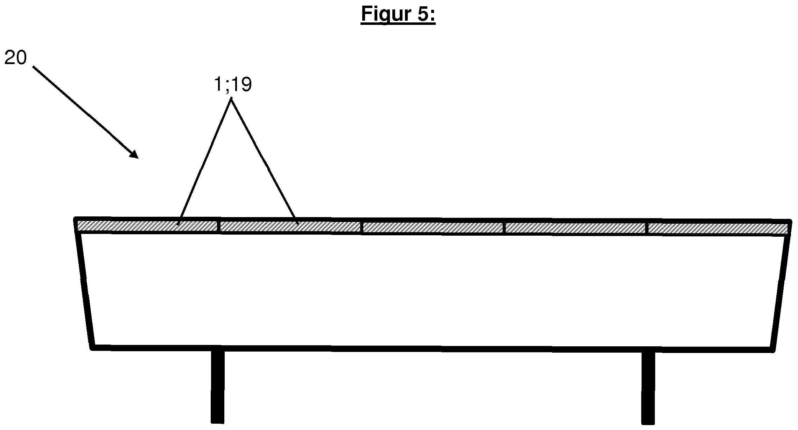

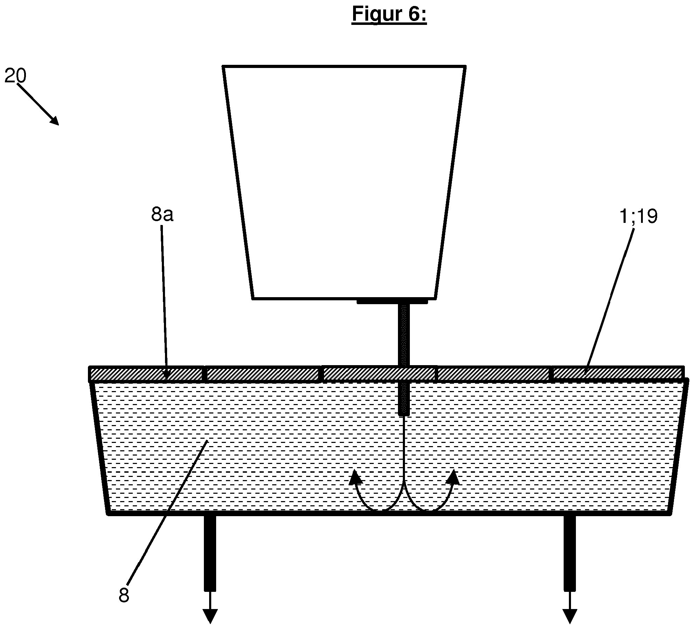

Der Formkörper 1 kann in vorteilhafter Weise auch als Abdeckplatte zum Abdecken bzw. zur Isolation der freien Metallbadoberfläche 8a in einem anderen, oben offenen, metallurgischen Gefäß verwendet. Insbesondere kann der Formkörper 1 als Abdeckplatte 19 für einen Gießverteiler 20 (Fig. 5 und 6), bevorzugt einen Stranggießverteiler (Tundish) verwendet werden.

Vor dem Anguss wird der Gießverteiler 20 vorzugsweise mit mehreren Abdeckplatten 19 abgedeckt (Fig. 5). Während des Angusses steigt das Metallbad 8 bis zu den Abdeckplatten 19 an. Diese bilden eine die Metallbadoberfläche 8a abdeckende, durchgehende, isolierende Abdeckschicht.

Der Formkörper 1 kann zudem auch in vorteilhafter Weise als Abdeckplatte zum Abdecken bzw. zur Isolation der freien Metallbadoberfläche 8a in einer Gießpfanne oder in Rinnen verwendet werden.

Der Formkörper 1 kann zudem auch direkt auf die Metallbadoberfläche 8a aufgelegt werden, so dass er auf dieser schwimmt.

Zudem kann der Formkörper 1 als thermische Isolation in einem Mehrschichtmauerwerk oder in Wärmebehandlungsöfen für feuerfeste Auskleidungen oder als Korrosionssperre (z.B. gegen Alkaliangriff) oder als Brandschutzauskleidung oder als Filtermaterial für Heißgase verwendet werden.

Der erfindungsgemäß verwendete Formkörper 1 weist bei niedrigen Temperaturen als auch bei hohen Temperaturen eine geringe Wärmeleitfähigkeit und dadurch hervorragende wärmedämmende Eigenschaften auf. Bei der Verwendung zur Blockkopfisolation im steigenden Blockguss gewährleistet dies eine konstant gute Blockkopfqualität. Die gute Wärmedämmung resultiert insbesondere aus den sehr guten wärmedämmenden Eigenschaften der biogenen Kieselsäure und deren sehr hohem Schmelzpunkt von ca. 1650 °C.

Des Weiteren ist der erfindungsgemäße Formkörper 1 alkaliresistent und weist eine hohe Feuerfestigkeit auf. Dies resultiert aus der Kombination der alkaliresistenten und hoch feuerfesten biogenen Kieselsäure, insbesondere der Reisschalenasche, mit dem Silikasol als Bindemittel. Denn die SiO₂-Bindung des Kieselgels gewährleistet eine hohe Alkaliresistenz und Feuerfestigkeit der Bindemittelmatrix.

Des Weiteren ist der Formkörper 1 schadstofffrei. Außerdem handelt es sich bei der Reisschalenasche um ein natürliches Recyclingprodukt.

Bei der Verwendung der Abdeckplatte 10 gleichzeitig als Halteplatte für den Gießpulversack 11 und im Anschluss daran zur Isolation des Blockkopfes 15 entfällt ein zusätzlicher Verfahrensschritt. Denn ein Entfernen der Halteplatte und das anschließende Aufbringen der losen Reisschalenasche entfällt.

Zudem ist die Staubbelastung deutlich reduziert. Das Auflegen der Abdeckplatten 10;19 auf die Kokille 7 bzw. den Gießverteiler 20 ist zudem deutlich einfacher als das Aufbringen einer losen Schüttung auf die Metallbadoberfläche 8a. Außerdem kann dies vor dem Einfüllen der Metallschmelze erfolgen, was für den jeweiligen Arbeiter eine deutlich geringere Temperaturbelastung bedeutet.

Im Rahmen der Erfindung liegt es dabei auch, dass bei der Herstellung die biogene Kieselsäure, insbesondere die Reisschalenasche, vor dem Mischen mit den anderen Bestandteilen des Formkörpers mit Wasser und/oder Silikasol granuliert wird und das weiche bzw. plastische, noch nicht abgebundene Granulat den übrigen Bestandteilen zugemischt wird. Beim Verdichten oder Pressen werden die plastischen Granulatkörner zerstört, so dass der Formkörper mit den Zuschlagkörnern aus der biogenen Kieselsäure entsteht. Vorteil dieser Verfahrensvariante ist, dass die Staubentwicklung geringer ist.

### Ausführungsbeispiel:

Es wurde eine erfindungsgemäße Platte aus einem Versatz mit folgender Zusammensetzung mittels uniaxialem Pressen hergestellt:

| | **Anteil [Gew.-%]** |
|---|---|
| Flüssiges SiO₂-Bindemittel (Köstrosol 2030) | 50 |
| Reisschalenasche (NERMAT BF - E) | 50 |

Die fertige Mischung wurde mit einem Flächengewicht von 0,5 N/mm² verdichtet. Die Platte wurde entformt und bei 150°C für 12 h im Trockenschrank auf einem Blech getrocknet und abbinden gelassen. Die Platte wies folgende Maße auf: 670 x 670 x 40 mm³. Die hergestellten Platte hatte folgende Eigenschaften:

| | |
|---|---|
| Trockenrohdichte ρ₀ (DIN EN 1094-4 (09/1995)) | 0,61 g/cm³ |
| Porosität (DIN EN 1094-4 (09/1995)) | 74,65 % |
| Kaltdruckfestigkeit (DIN EN 993-5 (12/1998)) | 1,5 N/mm² |
| Kaltbiegefestigkeit (DIN EN 993-6 (04/1995)) | 0,6 N/mm² |

## Patentansprüche

1. Ungebrannter, feuerfester Formkörper (1), insbesondere Platte, insbesondere zur thermischen Isolation einer Metallschmelze und/oder eines aus der Metallschmelze erstarrenden Gussblocks (14), aufweisend eine Bindemittelmatrix (2) aus einem abgebundenen Bindemittel und Zuschlagkörner (3) aus biogener Kieselsäure, vorzugsweise aus Reisschalenasche, welche in die Bindemittelmatrix (2) eingebunden sind, wobei die Bindemittelmatrix (2) aus Kieselgel besteht.
**dadurch gekennzeichnet, dass**
der Zuschlag des Formkörpers (1), bezogen auf die gesamte Trockenmasse an Zuschlagstoffen, besteht aus:
a) zu mindestens 50 Gew.-% aus biogener Kieselsäure, bevorzugt aus Reisschalenasche,
b) gegebenenfalls aus einem oder mehreren weiteren, aus SiO₂ bestehenden Zuschlagstoffen, und
c) 0 bis < 10 Gew.-% aus einem oder mehreren weiteren Zuschlagstoffen aus feuerfestem Material, die nicht nur aus SiO₂ bestehen, und
der Formkörper (1) einen Erweichungspunkt bestimmt mit einem Erhitzungsmikroskop gemäß DIN EN 51730 (09/2007) von 1500 bis 1700 °C aufweist.

2. Formkörper (1) nach Anspruch 1,
**dadurch gekennzeichnet, dass**
es sich bei der biogenen Kieselsäure um Reisschalenasche und/oder um Diatomeenerde (Kieselgur) und/oder um Kieselschiefer und/oder um diagenetisch zu Gestein verfestigte Radialarienskelette oder Schwämme aus Opal handelt.

3. Formkörper (1) nach Anspruch 1 oder 2,
**dadurch gekennzeichnet, dass**
der Zuschlag des Formkörpers (1) zu mindestens 80 Gew.-%, bevorzugt zu mindestens 90 Gew.-%, besonders bevorzugt zu 100 Gew.-%, aus biogener Kieselsäure, bevorzugt aus Reisschalenasche, bezogen auf die gesamte Trockenmasse an Zuschlagstoffen, besteht.

4. Formkörper (1) nach einem der vorhergehenden Ansprüche,
**dadurch gekennzeichnet, dass** der Formkörper (1)
eine Trockenrohdichte ρ₀ von 0,3 bis 1,5 g/cm³, bevorzugt von 0,5 bis 1,3 g/cm³, gemäß DIN EN 1094-4 (09/1995)
und/oder
eine Porosität von 60 bis 90%, bevorzugt von 70 bis 80 %, gemäß DIN EN 1094-4 (09/1995) aufweist.

5. Formkörper (1) nach einem der vorhergehenden Ansprüche,
**dadurch gekennzeichnet, dass** der Formkörper (1)
eine Kaltdruckfestigkeit von 0,5 bis 15,0 MPa, bevorzugt von 1,0 bis 10,0 MPa, gemäß DIN EN 993-5 (12/1998)
und/oder
eine Kaltbiegefestigkeit von 0,3 bis 7,0 MPa, bevorzugt von 0,5 bis 5,0 MPa, gemäß DIN EN 993-6 (04/1995)
und/oder
eine Heißbiegefestigkeit von 0,5 bis 5,0 MPa, bevorzugt von 1,0 bis 3,0 MPa, gemäß DIN EN 993-7 (04/1995) aufweist.

6. Formkörper (1) nach einem der vorhergehenden Ansprüche,
**dadurch gekennzeichnet, dass**
der Formkörper (1) einen Erweichungspunkt bestimmt mit einem Erhitzungsmikroskop gemäß DIN EN 51730 (09/2007) von 1650 bis 1700 °C, aufweist.

7. Formkörper (1) nach einem der vorhergehenden Ansprüche,
**dadurch gekennzeichnet, dass**
der Formkörper (1) folgende Wärmeleitfähigkeiten WLF gemäß DIN EN 993-15 (07/2005) aufweist:
| | **WLF [W/mK]** | |
|---|---|---|
| | | vorzugsweise |
| bei 26°C | 0,10 bis 0,14 | 0,11 bis 0,13 |
| bei 307°C | 0,12 bis 0,16 | 0,13 bis 0,15 |
| bei 700°C | 0,17 bis 0,21 | 0,18 bis 0,20 |
| bei 995°C | 0,25 bis 0,29 | 0,26 bis 0,28 |

8. Formkörper (1) nach einem der vorhergehenden Ansprüche,
**dadurch gekennzeichnet, dass**
der Formkörper (1) folgende chemische Zusammensetzung gemäß DIN EN ISO 12677 (02/2013) aufweist, wobei sich die einzelnen Bestandteile (glühverlustfrei) zu 100 Gew.-% addieren:
| | **Anteil [Gew.-%]** | |
|---|---|---|
| | | vorzugsweise |
| SiO₂ | 93,0 bis 99,0 | 95,0 bis 98,0 |
| P₂O₅ | 0,2 bis 1,5 | 0,5 bis 1,3 |
| K₂O | 0,3 bis 2,5 | 0,5 bis 2,2 |
| Rest-Oxide | 0,5 bis 3,0 | 1,0 bis 1,5 |

9. Formkörper (1) nach einem der vorhergehenden Ansprüche,
**dadurch gekennzeichnet, dass**
es sich bei dem weiteren, aus SiO₂ bestehenden Zuschlagstoff um Mikrosilika handelt.

10. Verfahren zur Herstellung eines ungebrannten, feuerfesten Formkörpers (1) nach einem der vorhergehenden Ansprüche,
**gekennzeichnet durch**
folgende Verfahrensschritte:
a) Herstellen einer Mischung aufweisend den Zuschlag und Silikasol,
b) Einfüllen der Mischung in eine Form,
c) Verdichten der Mischung,
d) Entformen des grünfesten Formkörpers (1),
e) Abbinden lassen des Formkörpers (1).

11. Verfahren nach Anspruch 10,
**dadurch gekennzeichnet, dass**
die Zusammensetzung der Mischung so eingestellt wird, dass die Mischung nach 30 s unter Vibration ein Ausbreitmaß, bestimmt in Anlehnung an DIN EN ISO 1927-4 (03/2013), von 200 bis 500 mm, bevorzugt 250 bis 350 mm aufweist.

12. Verfahren nach Anspruch 10 oder 11,
**dadurch gekennzeichnet, dass**
die Mischung folgende Zusammensetzung bezogen auf die gesamte Trockenmasse aufweist, wobei sich die einzelnen Bestandteile zu 100 Gew.-% ergänzen:
| | **Anteil [Gew.-%]** | |
|---|---|---|
| | | vorzugsweise |
| Biogene Kieselsäure, vorzugsweise Reisschalenasche | 40,0 bis 95,0 | 65,0 bis 90,0 |
| Siliciumdioxid als Bindemittel | 5,0 bis 30,0 | 10,0 bis 20,0 |
| Weitere Zuschlagstoffe | 0 bis 20,0 | 0 bis 10,0 |
| Sonstige Bestandteile | 0 bis 10,0 | 0 bis 5,0 |

13. Verwendung eines ungebrannten, feuerfesten Formkörpers (1) nach einem der Ansprüche 1 bis 9 und vorzugsweise hergestellt gemäß einem der Ansprüche 10 bis 12 zur thermischen Isolation einer Metallschmelze, insbesondere einer Stahlschmelze, und/oder eines aus der Metallschmelze erstarrenden metallischen Gussblocks (14), bevorzugt bei der Stahlherstellung, wobei
der Formkörper (1) vorzugsweise zur thermischen Isolation der sich in einem metallurgischen Gefäß befindlichen Metallschmelze, insbesondere der Stahlschmelze, und/oder des sich in einem metallurgischen Gefäß befindlichen Gussblocks (14), von dem Gefäß und/oder der Atmosphäre verwendet wird.

14. Verwendung nach Anspruch 13,
**dadurch gekennzeichnet, dass**
der Formkörper (1) zur thermischen Isolation der Metallschmelze, insbesondere der Stahlschmelze, und/oder des Gussblocks (14) beim steigenden Blockguss verwendet wird,
wobei der Formkörper (1) vorzugsweise zur thermischen Isolation eines Blockkopfes (15) des Gussblockes (14) verwendet wird.

15. Verwendung nach Anspruch 13 oder 14,
**dadurch gekennzeichnet, dass**
der Formkörper als Abdeckplatte (10) zum Abdecken und zur thermischen Isolation eines sich in einer Kokille (7) befindlichen Metallbades (8), insbesondere Stahlbades, verwendet wird.

16. Verwendung nach Anspruch 13 oder 14,
**dadurch gekennzeichnet, dass**
der Formkörper als Abdeckplatte (19) zum Abdecken und zur thermischen Isolation eines sich in einem Gießverteiler (20) befindlichen Metallbades (8), insbesondere eines Stahlbades, verwendet wird.

17. Verwendung nach Anspruch 15 oder 16,
**dadurch gekennzeichnet, dass**
die Abdeckplatte (10;19) zur Abdeckung des Metallbades (8) in der Kokille (7) oder dem Gießverteiler (20) beim steigenden oder fallenden Blockguss verwendet wird.

18. Verwendung eines ungebrannten, feuerfesten Formkörpers (1) nach einem der Ansprüche 1 bis 9 und vorzugsweise hergestellt gemäß einem der Ansprüche 10 bis 12 zur thermischen Isolation einer feuerfesten Auskleidung, insbesondere in einem Mehrschichtmauerwerk oder in einem Wärmebehandlungsofen, oder als Korrosionssperre, z.B. gegen Alkaliangriff, oder als Brandschutzauskleidung oder als Filtermaterial für Heißgase.

## Claims

1. Unfired, refractory molded body (1), especially plate, especially for thermal insulation of molten metal and/or an ingot (14) solidifying from molten metal, comprising a binding agent matrix (2) of a set binding agent and aggregate grains (3) of biogenic silicic acid, preferably of rice husk ash, which are incorporated into the binding agent matrix (2),
wherein the binding agent matrix (2) is comprised of silica gel,
**characterized in that**
with respect to the total dry mass of aggregate materials, the aggregate of the molded body (1) consists of:
a) of at least 50 wt.-% of biogenic silicic acid, preferably of rice husk ash,
b) if applicable of one or more additional aggregate materials, which consist of SiO₂, and
c) 0 to < 10 wt.-% of one or more additional aggregate materials made of refractory material, which are not solely composed of SiO₂, and
that the molded body (1) has a softening point, determined with a heating microscope according to DIN EN 51730 (09/2007) of 1500 to 1700°C.

2. Molded body (1) according to claim 1,
**characterized in that**
the biogenic silicic acid is rice husk ash and/or diatomaceous earth and/or silica shale and/or diagenetically fossilized radiolaria skeletons or opal sponges.

3. Molded body (1) according to claim 1 or 2,
**characterized in that**
the aggregate of the molded body (1) is comprised of at least 80 wt.-%, more preferably of at least 90 wt.-%, especially preferably 100 wt.-% of biogenic silicic acid, preferably of rice husk ash, with respect to the total dry mass of aggregate materials.

4. Molded body (1) according to one of the previous claims, **characterized in that** the molded body (1)
has a dry apparent density po from 0.3 to 1.5 g/cm³, more preferably from 0.5 to 1.3 g/cm³, according to DIN EN 1094-4 (09/1995)
and/or
a porosity of 60 to 90%, preferably from 70 to 80%, according to DIN EN 1094-4 (09/1995)

5. Molded body (1) according to one of the previous claims, **characterized in that** the molded body (1)
has a cold compression strength of 0.5 to 15.0 MPa, preferably of 1.0 to 10.0 MPa, according to DIN EN 993-5 (12/1998)
and/or
a cold bending strength of 0.3 to 7.0 MPa, preferably of 0.5 to 5.0 MPa, according to DIN EN 993-6 (04/1995)
and/or
a hot bending strength of 0.5 to 5.0 MPa, preferably of 1.0 to 3.0 MPa, according to DIN EN 993-7 (04/1995).

6. Molded body (1) according to one of the previous claims, **characterized in that**
the molded body (1) has a softening point, determined with a heating microscope according to DIN EN 51730 (09/2007),of 1650 to 1700°C.

7. Molded body (1) according to one of the previous claims, **characterized in that**
the molded body (1) has the following thermal conductivities according to DIN EN 993-15 (07/2005):
| | **Thermal Conductivity [W/mK]** | |
|---|---|---|
| | | Preferably |
| At 26°C | 0.10 to 0.14 | 0.11 to 0.13 |
| At 307°C | 0.12 to 0.16 | 0.13 to 0.15 |
| At 700°C | 0.17 to 0.21 | 0.18 to 0.20 |
| At 995°C | 0.25 to 0.29 | 0.26 to 0.28 |

8. Molded body (1) according to one of the previous claims, **characterized in that**
the molded body (1) has the following chemical composition according to DIN EN ISO 12677 (02/2013), wherein the individual components (without ignition loss) add up to 100 wt.-%:
| | **Amount [wt.-%]** | |
|---|---|---|
| | | Preferably |
| SiO₂ | 93.0 to 99.0 | 95.0 to 98.0 |
| P₂O₅ | 0.2 to 1.5 | 0.5 to 1.3 |
| K₂O | 0.3 to 2.5 | 0.5 to 2.2 |
| Remaining oxides | 0.5 to 3.0 | 1.0 to 1.5 |

9. Molded body (1) as claimed in one of the previous claims, **characterized in that**
the additional refractory aggregate material which consists of SiO₂ is microsilica.

10. Process for producing an unfired refractory molded body (1) according to one of the previous claims,
**characterized by**
the following steps:
a) Producing of a mixture comprising the aggregate and silica sol,
b) Filling the mixture into a mold,
c) Compacting of the mixture,
d) Demolding the green molded body (1),
e) Allowing the molded body (1) to set.

11. Process according to claim 10,
**characterized in that**
the composition of the mixture is adjusted such that after 30 s under vibration the mixture has a slump - determined in reference to DIN EN ISO 1927-4 (03/2013) - of 200 to 500 mm, preferably 250 to 350 mm.

12. Process according to claim 10 or 11,
**characterized in that**
the mixture has the following composition in relation to the total dry mass, wherein the individual components add up to 100 wt.-%:
| | **Amount [wt.-%]** | |
|---|---|---|
| | | Preferably |
| Biogenic silicic acid, preferably rice husk ash | 40.0 to 95.0 | 65.0 to 90.0 |
| Silicon dioxide as binding agent | 5.0 to 30.0 | 10.0 to 20.0 |
| Additional aggregate materials | 0 to 20.0 | 0 to 10.0 |
| Other components | 0 to 10.0 | 0 to 5.0 |

13. Use of an unfired, refractory molded body (1) according to one of claims 1 to 9 and preferably produced according to one of claims 10 to 12 for thermal insulation of molten metal, especially molten steel, and/or a metallic ingot (14) solidifying from the molten metal, preferably in steel production, wherein
the molded body (1) is preferably used for thermal insulation of the molten metal, particularly the molten steel, within a metallurgical vessel, and/or an ingot (14) within a metallurgical vessel, from the vessel and/or from the atmosphere.

14. Use according to claim 13,
**characterized in that**
the molded body (1) is used for thermal insulation of the molten metal, particularly of the molten steel, and/or of the ingot (14) in rising ingot casting,
wherein the molded body (1) is preferably used for thermal insulation of an ingot head (15) of the ingot (14).

15. Use according to claim 13 or 14,
**characterized in that**
the molded body is used as a cover plate (10) for covering and thermally insulating a metal bath (8), particularly a steel bath, within an ingot mold (7).

16. Use according to claim 13 or 14,
**characterized in that**
the molded body is used as a cover plate (19) for covering and thermally insulating a metal bath (8), particularly a steel bath, within a casting distributor (20).

17. Use according to claim 15 or 16,
**characterized in that**
the cover plate (10; 19) is used for covering the metal bath (8) within the ingot mold (7) or the casting distributor (20) in rising or falling ingot casting.

18. Use of an unfired, refractory molded body (1) according to one of claims 1 to 9 and preferably produced according to one of claims 10 to 12 for thermal insulation of a refractory lining, especially in multi-layer masonry or in heat-treatment ovens or as a corrosion barrier, for example against alkali attack, or as a fire protection lining or as filter material for hot gases.

## Revendications

1. Corps moulé réfractaire non cuit(1), en particulier plaque, en particulier pour l'isolation thermique d'une fonte métallique et/ou d'un lingot de fonderie (14) se solidifiant à partir de la fonte métallique, présentant une matrice de liant (2) constituée d'un liant durci et de granulats minéraux (3) constitués d'acide silicique biogène, de préférence de cendre de balle de riz qui sont intégrés dans la matrice de liant (2),
dans lequel la matrice de liant (2) se compose de gel de silice,
**caractérisé en ce que**
le granulat du corps moulé (1), se compose, par rapport à la masse sèche entière de granulats :
a) à au moins 50 % en poids d'acide silicique biogène, de préférence de cendre de balle de riz,
b) éventuellement d'un ou plusieurs autres granulats se composant de SiO₂, et
c) 0 à < 10 % en poids d'un ou plusieurs autres granulats de matériau réfractaire qui ne se composent pas seulement de SiO₂, et
le corps moulé (1) présente un point de ramollissement déterminé avec un microscope à échauffement selon la norme DIN EN 51730 (09/2007) allant de 1500 à 1700 °C.

2. Corps moulé (1) selon la revendication 1,
**caractérisé en ce que**
il s'agit pour l'acide silicique biogène de cendre de balle de riz et/ou de terre de diatomées (tripoli) et/ou de schiste siliceux et/ou de squelette de radiolaire consolidé de manière diagénétique en roche ou éponges d'opale.

3. Corps moulé (1) selon la revendication 1 ou 2,
**caractérisé en ce que**
le granulat du corps moulé (1) se compose à au moins 80 % en poids, de préférence à au moins 90 % en poids, de manière particulièrement préférée à 100 % en poids, d'acide silicique biogène, de préférence de cendre de balle de riz, par rapport à la masse sèche entière de granulats.

4. Corps moulé (1) selon l'une quelconque des revendications précédentes,
**caractérisé en ce que** le corps moulé (1)
présente une densité brute sèche po allant de 0,3 à 1,5 g/cm³, de préférence de 0,5 à 1,3 g/cm³, selon la norme DIN EN 1094-4 (09/1995)
et/ou
une porosité allant de 60 à 90 %, de préférence de 70 à 80 %, selon la norme DIN EN 1094-4 (09/1995).

5. Corps moulé (1) selon l'une quelconque des revendications précédentes,
**caractérisé en ce que** le corps moulé (1)
présente une résistance à froid sous charge allant de 0,5 à 15,0 MPa, de préférence de 1,0 à 10,0 MPa, selon la norme DIN EN 993-5 (12/1998)
et/ou
une résistance de pliage à froid allant de 0,3 à 7,0 MPa, de préférence de 0,5 à 5,0 MPa, selon la norme DIN EN 993-6 (04/1995)
et/ou
une résistance de pliage à chaud allant de 0,5 à 5,0 MPa, de préférence de 1,0 à 3,0 MPa, selon la norme DIN EN 993-7 (04/1995).

6. Corps moulé (1) selon l'une quelconque des revendications précédentes,
**caractérisé en ce que**
le corps moulé (1) présente un point de ramollissement déterminé avec un microscope à échauffement selon la norme DIN EN 51730 (09/2007) allant de 1650 à 1700 °C.

7. Corps moulé (1) selon l'une quelconque des revendications précédentes,
**caractérisé en ce que**
le corps moulé (1) présente les conductivités thermiques suivantes WLF selon la norme DIN EN 993-15 (07/2005) :
| | WLF [W/mK] | |
|---|---|---|
| | | de préférence |
| à 26 °C | 0,10 à 0,14 | 0,11 à 0,13 |
| à 307 °C | 0,12 à 0,16 | 0,13 à 0,15 |
| à 700 °C | 0,17 à 0,21 | 0,18 à 0,20 |
| à 995 °C | 0,25 à 0,29 | 0,26 à 0,28 |

8. Corps moulé (1) selon l'une quelconque des revendications précédentes,
**caractérisé en ce que**
le corps moulé (1) présente la composition chimique suivante selon la norme DIN EN IOS 12677 (02/2013), dans lequel les constituants individuels (sans perte par calcination) s'ajoutent pour former 100 % en poids :
| | Part [% en poids] | |
|---|---|---|
| | | de préférence |
| SiO₂ | 93,0 à 99,0 | 95,0 à 98,0 |
| P₂O₅ | 0,2 à 1,5 | 0,5 à 1,3 |
| K₂O | 0,3 à 2,5 | 0,5 à 2,2 |
| Oxydes résiduels | 0,5 à 3,0 | 1,0 à 1,5 |

9. Corps moulé (1) selon l'une quelconque des revendications précédentes,
**caractérisé en ce que**
il s'agit pour l'autre granulat se composant de SiO₂ de microsilice.

10. Procédé de fabrication d'un corps moulé (1) réfractaire, non cuit selon l'une quelconque des revendications précédentes,
**caractérisé par**
les étapes de procédé suivantes :
a) la fabrication d'un mélange présentant le granulat et le sol de silice,
b) le remplissage du mélange dans un moule,
c) la compression du mélange,
d) le démoulage du corps moulé (1) résistant à cru,
e) le durcissement du corps moulé (1).

11. Procédé selon la revendication 10,
**caractérisé en ce que**
la composition du mélange est réglée de sorte que le mélange présente après 30 s sous vibration une plasticité, déterminée en s'appuyant sur la norme DIN EN ISO 1927-4 (03/2013), allant de 200 à 500 mm, de préférence de 250 à 350 mm.

12. Procédé selon la revendication 10 ou 11,
**caractérisé en ce que**
le mélange présente la composition suivante par rapport à la masse sèche entière, dans lequel les constituants individuels se complètent à 100 % en poids :
| | Part [% en poids] | |
|---|---|---|
| | | de préférence |
| Acide silicique biogène, de préférence cendre de balle de riz | 40,0 à 95,0 | 65,0 à 90,0 |
| Dioxyde de silicium comme liant | 5,0 à 30,0 | 10,0 à 20,0 |
| Autres granulats | 0 à 20,0 | 0 à 10,0 |
| Autres constituants | 0 à 10,0 | 0 à 5,0 |

13. Utilisation d'un corps moulé (1) réfractaire, non cuit selon l'une quelconque des revendications 1 à 9 et fabriqué de préférence selon l'une quelconque des revendications 10 à 12 pour l'isolation thermique d'une fonte métallique, en particulier une fonte d'acier, et/ou d'un lingot de fonderie (14) métallique se solidifiant à partir de la fonte métallique, de préférence lors de la fabrication d'acier, dans laquelle
le corps moulé (1) est de préférence utilisé pour l'isolation thermique de la fonte métallique se trouvant dans un récipient métallurgique, en particulier la fonte d'acier, et/ou du lingot de fonderie (14) se trouvant dans un récipient métallurgique, du récipient et/ou de l'atmosphère.

14. Utilisation selon la revendication 13,
**caractérisée en ce que**
le corps moulé (1) est utilisé pour l'isolation thermique de la fonte métallique, en particulier de la fonte d'acier, et/ou du lingot de fonderie (14) en cas de lingot de fonderie montant,
dans laquelle le corps moulé (1) est utilisé de préférence pour l'isolation thermique d'une tête de lingot (15) du lingot de fonderie (14).

15. Utilisation selon la revendication 13 ou 14,
**caractérisée en ce que**
le corps moulé est utilisé comme plaque de recouvrement (10) pour le recouvrement et pour l'isolation thermique d'un bain métallique (8) se trouvant dans une coquille (7), en particulier bain d'acier.

16. Utilisation selon la revendication 13 ou 14,
**caractérisée en ce que**
le corps moulé est utilisé comme plaque de recouvrement (19) pour le recouvrement et pour l'isolation thermique d'un bain métallique (8) se trouvant dans un répartiteur de coulée (20), en particulier d'un bain d'acier.

17. Utilisation selon la revendication 15 ou 16,
**caractérisée en ce que**
la plaque de recouvrement (10 ; 19) est utilisée pour le recouvrement du bain métallique (8) dans la coquille (7) ou le répartiteur de coulée (20) en cas de lingot de fonderie montant ou descendant.

18. Utilisation d'un corps moulé (1) réfractaire non cuit selon l'une quelconque des revendications 1 à 9 et fabriqué de préférence selon l'une quelconque des revendications 10 à 12 pour l'isolation thermique d'un revêtement réfractaire, en particulier dans une maçonnerie à plusieurs couches ou dans un four de traitement thermique, ou comme barrière à la corrosion, par exemple contre une attaque alcaline, ou comme revêtement ignifuge ou comme matériau de filtre pour des gaz chauds.
